# EUROPÄISCHE PATENTANMELDUNG

(11) **EP 1 912 027 A2**
(43) Veröffentlichungstag der Anmeldung: **16.04.2008**
(21) Anmeldenummer: 07019498.0
(22) Anmeldetag: 05.10.2007
(51) Int. Cl.: F24H 1/32, F24H 8/00

(54) **Gliederheizkessel**

(30) Priorität: 13.10.2006 DE 102006048515
(71) Anmelder: Robert Bosch GmbH, 70442 Stuttgart (DE)
(72) Erfinder: Rausch, Rainer, 36304 Alsfeld-Eifa (DE); Rollmann, Jürgen, 35457 Lollar (DE)

(57) **Zusammenfassung**

Die Erfindung betrifft einen Gliederheizkessel, umfassend mindestens ein vertikales Kesselglied aus einem Gusswerkstoff für Gas- oder Ölgebläsebrennerfeuerung, insbesondere zur Verwendung in einem Brennwertheizgerät, für den Wärmeaustausch zwischen Heizgasen und Kesselwasser, umfassend eine Nachschaltheizfläche für die Kondensation der Abgasfeuchte.

Der Erfindung liegt die Aufgabe zugrunde, einen Gliederheizkessel zu schaffen, der den korrosiven Angriff aus dem Kondenswasser erträgt, einen geringen hydraulischen Widerstand, geringe Auskühlverluste und eine gute Skalierbarkeit aufweist sowie gut zu reinigen ist.

Der konstruktive Aufbau des Gliederheizkessels ist dadurch gekennzeichnet, dass die Längsachse der oben angeordneten Brennkammer horizontal verläuft, und dass die Nachschaltheizfläche im Inneren des Kesselgliedes integriert ist und im Wesentlichen von oben nach unten mit Heizgas durchströmt wird. An ihren vertikalen Seiten ist die Nachschaltheizfläche vom Kesselwasserraum umschlossen. In einer ersten Ausführungsform ist die Nachschaltheizfläche im Kesselglied mit angegossen und mit einer korrosionsbeständigen Beschichtung versehen. In einer zweiten Ausführungsform besteht die Nachschaltheizfläche aus einem gesonderten, mindestens ein rohrförmiges oder taschenförmiges Einzelelement umfassenden, Wärmetauscher aus korrosionsbeständigem Werkstoff, der im Inneren des Kesselgliedes hydraulisch eingebunden ist.

## Beschreibung

Die Erfindung betrifft einen Gliederheizkessel aus vertikalen Kesselgliedern aus einem Gusswerkstoff für Gas- oder Ölgebläsebrennerfeuerung, insbesondere zur Verwendung in einem Brennwertheizgerät nach dem Oberbegriff des Patentanspruches 1.

Gattungsgemäße Gliederheizkessel werden bei Heizgeräten für den Wärmeaustausch zwischen den Heizgasen und dem Kesselwasser eingesetzt. Ihr Aufbau umfasst unter anderem eine Brennkammer zur Aufnahme des Gas- oder Ölbrenners, Strömungskanäle für Heizgase und Kesselwasser, Nachschaltheizflächen für die Kondensation der Abgasfeuchte, oberflächenvergrößernde Wärmeleitelemente in Brennkammer, Strömungskanälen und Nachschaltheizflächen, Abgasaustrittsöffnungen zum Anbringen eines Abgas- und Kondensatsammlers, sowie Naben für die wasserseitige Verbindung der Kesselglieder untereinander.

Hinsichtlich der Abgasführung und des Wirkungsgrades der Heizgeräte unterscheidet man zwischen Heizwerttechnik und Brennwerttechnik. Aus Gründen der Energieeinsparung kommen immer mehr Brennwertheizgeräte zur Anwendung. Der Aufbau ihres Wärmetauschers gewährt die Möglichkeit, die im Betrieb bei der Verbrennung von Brennstoff und Luft entstehenden feuchten Abgase unter den Abgastaupunkt abzukühlen. Dabei kondensiert die Feuchtigkeit der Abgase in einer der Brennkammer in Strömungsrichtung nachfolgenden, sogenannten Nachschaltheizfläche aus, und es wird zusätzlich zur fühlbaren Wärme die Kondensationswärme auf das Heizwasser übertragen. Heizgas und Kondensat strömen nach unten, während das Kesselwasser vom Rücklaufanschluss im unteren Bereich zum Vorlaufanschluss im oberen Bereich strömt.

Aufgrund der Zusammensetzung des verwendeten Brennstoffs und der Verbrennungsführung sind die Abgase schadstoffbelastet und das anfallende Kondenswasser weist verschiedene Säuren in geringer Konzentration auf. Die von Kondenswasser berührten Bauteile wie Wärmetauscher, Abgassammler und Abgasleitung müssen also gegenüber den Säuren resistent sein, weshalb es üblich ist, diese Bauteile aus Edelstahl, Aluminium oder Kunststoff zu fertigen. Speziell in der Ölbrennwerttechnik kommen im Allgemeinen geschweißte Edelstahlwärmetauscher zur Anwendung. Sie bieten den Vorteil, die Säurebelastung weitgehend ohne Korrosion zu ertragen. Nachteilig sind die mit dem Werkstoff verbundenen hohen Kosten, ungünstigere konstruktive Randbedingungen zum Skalieren auf andere Leistungsgrößen und die größeren, in räumlich engen Verhältnissen schwer handhabbaren Baugrößen.

Die Wärmetauscher konventioneller Heizwertgeräte werden häufig aus Gusseisen hergestellt. Sie zeichnen sich durch hohe Robustheit und lange Lebensdauer aus. Ihr Aufbau aus zumeist identischen Kesselgliedern erlaubt eine kostengünstige Fertigung und leichte Skalierbarkeit hinsichtlich unterschiedlicher Leistungsgrößen und bietet gute Montagemöglichkeiten selbst unter engen Aufstellbedingungen. Der Werkstoff erträgt die kurzen Abgaskondensationsphasen bei Betriebsstart und kaltem Wärmetauscher sehr gut. Lediglich für den Brennwertbetrieb mit länger anhaltendem Kondenswasseranfall ist Gusseisen in seiner heutigen Form nicht geeignet.

Hinsichtlich der heizwasserseitigen Strömungsführung unterscheidet man zwischen zwangsdurchströmten und nicht zwangsdurchströmten Wärmetauschern. Bei zwangsdurchströmten Wärmetauschern sorgt eine Umwälzpumpe für einen vorgegebenen Wasservolumenstrom durch die zumeist engen, mäanderförmig angelegten Wasserkanäle. Auf diese Weise sind trotz geringen Wasserinhaltes recht hohe, heizgasseitig eingetragene Wärmestromdichten realisierbar. Bei nicht zwangsdurchströmten Wärmetauschern ist der Kesselwasserinhalt deutlich größer, gleichzeitig sind die realisierbaren Wärmestromdichten in der Regel niedriger. Die Wasserführung erfolgt nicht in engen geschlossenen Kanälen, sondern über oberflächenvergrößernde Wärmeleitelemente, beispielsweise in Rippenform, in vergleichsweise groß bemessenen Querschnitten und basiert auf thermischer Konvektion. Ausgehend von einem beispielsweise ruhenden Kesselwasserinhalt wird bei heizgasseitiger Beheizung des Wärmetauschers das den Wärmetauscher berührende Wasser durch Wärmeleitung erwärmt. Aufgrund des thermischen Auftriebs kommt allmählich eine Strömungswalze auf der Wasserseite in Gang, die das erwärmte Wasser nach oben abführt und weiteres zu erwärmendes Wasser von unten an die heiße Wärmetauscheroberfläche heranführt. Wegen dieser konvektiven Strömungswalze und den groß bemessenen Querschnitten weisen nicht zwangsdurchströmte Wärmetauscher eine hohe Robustheit im Betrieb zum Beispiel gegenüber einem etwaigen Pumpenausfall auf.

Aus der DE 296 21 817 U1 ist ein Brennwertheizkessel mit integriertem und hydraulisch nachgeschaltetem Kompaktwärmetauscher aus korrosionsbeständigem Werkstoff bekannt. Dieser Kompaktwärmetauscher ist als separates Bauteil von zwei schalenförmigen Kesselgliedern umschlossen und wasserseitig gesondert angeschlossen. Alle Kessel mit nachgeschaltetem Wärmetauscher haben die Nachteile, dass der Montageaufwand durch die erforderlichen Rohrteile erhöht wird und der wasserseitige Widerstand ansteigt. Die Anordnung als separates außenliegendes Bauteil bewirkt ebenfalls Abkühlverluste, die durch eine geeignete Wärmedämmung vermindert werden müssen. Der Wärmetauscher ist für eine Reinigung nur schlecht zugänglich und eine einfache Skalierbarkeit auf größere Leistungsgrößen ist nicht gegeben.

Der Erfindung liegt die Aufgabe zugrunde, einen Gliederheizkessel aus vertikalen Kesselgliedern aus einem Gusswerkstoff für Gas- oder Ölgebläsebrennerfeuerung, insbesondere zur Verwendung in einem Brennwertheizgerät, zu schaffen, der den korrosiven Angriff aus dem Kondenswasser erträgt, einen geringen hydraulischen Widerstand, geringe Auskühlverluste und eine gute Skalierbarkeit aufweist sowie gut zu reinigen ist.

Erfindungsgemäß wird dies mit den Merkmalen des Patentanspruches 1 gelöst. Vorteilhafte Weiterbildungen sind den Unteransprüchen zu entnehmen.
Der konstruktive Aufbau des Gliederheizkessels ist dadurch gekennzeichnet, dass die Längsachse der oben angeordneten Brennkammer horizontal verläuft, und dass die Nachschaltheizfläche im Inneren des Kesselgliedes integriert ist und im Wesentlichen von oben nach unten mit Heizgas durchströmt wird. An ihren vertikalen Seiten ist die Nachschaltheizfläche vom Kesselwasserraum umschlossen. In einer ersten Ausführungsform ist die Nachschaltheizfläche im Kesselglied mit angegossen und mit einer korrosionsbeständigen Beschichtung versehen. Gegebenenfalls wird auch der Hochtemperaturbereich in der Brennkammer beschichtet. In einer zweiten Ausführungsform besteht die Nachschaltheizfläche aus einem gesonderten Wärmetauscher, der mindestens ein rohrförmiges oder taschenförmiges Einzelelement umfasst. Der aus korrosionsbeständigem Werkstoff gefertigte Wärmetauscher ist im Inneren des Kesselgliedes über eine Flanschverbindung hydraulisch eingebunden. Jedes Einzelelement weist zum Ausgleich von Längenausdehnungen einen Kompensator auf. Im Randbereich der Kesselglieder befinden sich senkrecht auf der Längsachse der Brennkammer stehende, mindestens einen Teilbereich des Brennkammerumfangs einnehmende Überströmkanäle, in denen das Heizgas von der Brennkammer in die Strömungskanäle strömt. Diese Überströmkanäle sind im Wesentlichen nach oben gerichtet. Das Kesselglied besitzt einen symmetrischen Aufbau. Die Brennkammer bildet das Zentrum des oberen Bereiches, sie ist beidseitig von Strömungskanälen für Heizgas umgeben. Die Nachschaltheizfläche ist in zwei Bereiche unterhalb dieser Strömungskanäle aufgegliedert. Zwischen diesen Bereichen ragt ein Teil des Kesselwasseraumes bis in den Bereich der unteren Nabe, der Kesselwasserraum setzt sich nach oben hin fort, geht in einen zylindrischen Mantel um die Brennkammer über und mündet im oberen Bereich in der oberen Nabe. Die Grenzfläche zwischen zwei benachbarten Kesselgliedern ist heizgas- und kondensatdicht ausgeführt.

Ein solcher erfindungsgemäßer Gliederheizkessel bietet die Vorteile, die positiven Werkstoffeigenschaften von Gusswerkstoffen und korrosionsbeständigen Beschichtungswerkstoffen bzw. Edelstahl und Kunststoff gezielt anzuwenden und zu nutzen. So werden Hochtemperaturkorrosion und Säurekorrosion auslösende Belastungen mit jeweils optimal geeigneten Werkstoffen aufgefangen. Durch Verzicht auf die wasserseitige Zwangsdurchströmung ist ein robustes Aufheizverhalten gegeben, eine Wasseraufbereitung hinsichtlich der Vermeidung von Ablagerungen oder Korrosion ist nicht erforderlich. Die Nachschaltheizfläche, die der Kondensation der feuchten Abgase dient, ist in einer ersten Ausführungsform direkt im Kesselglied mit angegossen. Sie kann mit einer korrosionsbeständigen Beschichtung versehen sein. In einer zweiten Ausführungsform besteht sie aus einem gesondert einzusetzenden Wärmetauscher aus rohr- oder taschenförmigen Einzelelementen aus korrosionsbeständigem Werkstoff. Die hydraulische Anbindung des Wärmetauschers beschränkt sich auf eine einfache Flanschverbindung und verzichtet auf weitere Rohrteile. Durch die Integration der Nachschaltheizfläche entstehen keine Auskühlverluste, auf eine gesonderte Wärmedämmung kann verzichtet werden. Dennoch ist eine gute Zugänglichkeit der Abgasseite gewährleistet und die Reinigung oder ein gegebenenfalls erforderlicher Austausch sehr einfach. Die beschichteten Bereiche sind durch die Anordnung im Kesselgliedinneren gegen Beschädigungen, wie sie zum Beispiel bei der Handhabung in der Fertigung auftreten können, geschützt. Somit ist auch das Beschichten während des Gießvorganges und eine nachfolgende mechanische Kesselgliedbearbeitung gefahrlos möglich. Wasserseitige und abgasseitige Strömungswiderstände sind sehr gering. In der Kesselfertigung kann jedes Kesselglied mit integrierter Nachschaltheizfläche auf Dichtheit geprüft werden, der Zusammenbau erfolgt wie bei der herkömmlichen Montage. Eine gute Skalierbarkeit im Hinblick auf verschiedene Leistungsgrößen ist durch den Kesselaufbau aus einzelnen Kesselgliedern gewährleistet.

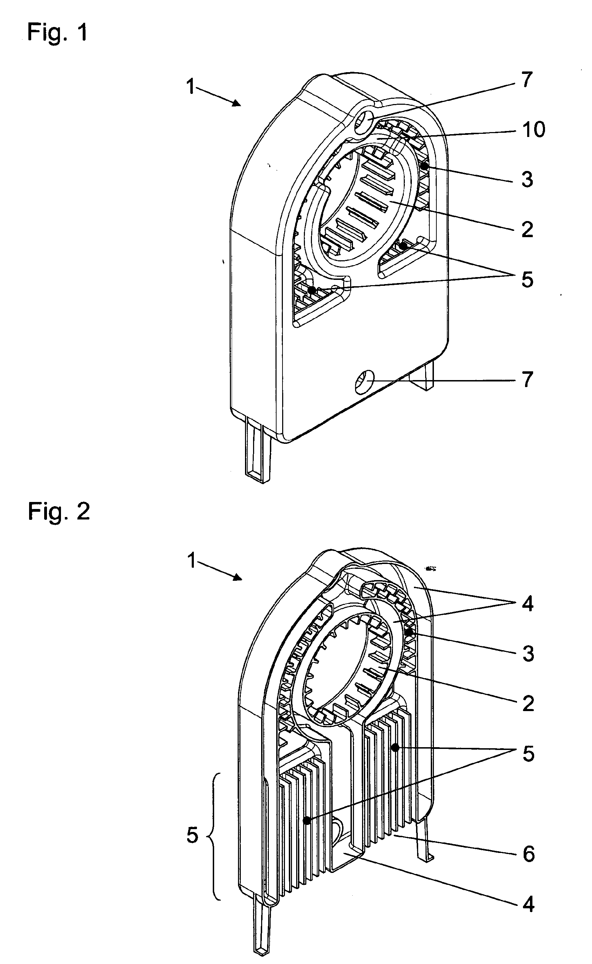

Die Zeichnungen stellen Ausführungsbeispiele der Erfindung dar. Es zeigt in perspektivischer Ansicht
Fig. 1: ein Kesselglied eines Gliederheizkessels in einer ersten Ausführungsform,
Fig. 2: ein Kesselglied nach Figur 1 in vertikalem Schnitt,

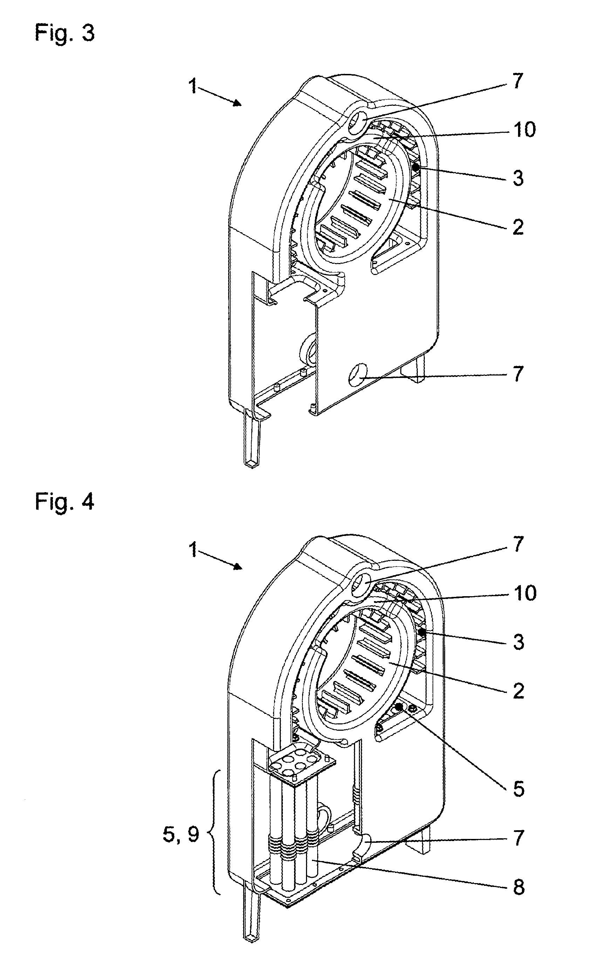

Fig. 3: ein Kesselglied in einer zweiten Ausführungsform im Teilschnitt, Darstellung ohne die Nachschaltheizfläche in Form eines gesonderten Wärmetauschers und
Fig. 4: ein Kesselglied nach Figur 3 im Teilschnitt mit Nachschaltheizfläche in Form eines gesonderten Wärmetauschers.

Das Kesselglied 1 besteht aus der horizontal ausgerichteten Brennkammer 2, Überströmkanal 10, Strömungskanälen 3 und 4 für Heizgase und Kesselwasser, Abgasaustrittsöffnungen 6 sowie Naben 7 für die wasserseitige Verbindung der Kesselglieder 1. In das Innere des Kesselgliedes 1 integriert ist die vertikale, von oben nach unten durchströmte Nachschaltheizfläche 5 für die Kondensation der Abgasfeuchte. Die Nachschaltheizfläche 5 ist entweder im Kesselglied mit angegossen oder wird aus einem gesonderten Wärmetauscher 9 gebildet, der rohrförmige Einzelelemente 8 umfasst und im Kesselglied angeflanscht ist.

## Patentansprüche

1. Gliederheizkessel, umfassend mindestens ein vertikales Kesselglied (1) aus einem Gusswerkstoff für Gas- oder Ölgebläsebrennerfeuerung, insbesondere zur Verwendung in einem Brennwertheizgerät, für den Wärmeaustausch zwischen Heizgasen und Kesselwasser, umfassend
- eine Brennkammer (2) mit Anschlussmöglichkeit für einen Gas- oder Ölgebläsebrenner,
- Strömungskanäle (3, 4) für Heizgase und Kesselwasser,
- eine Nachschaltheizfläche (5) für die Kondensation der Abgasfeuchte,
- oberflächenvergrößernde Wärmeleitelemente in Brennkammer (2), Strömungskanälen (3, 4) und/oder Nachschaltheizfläche (5),
- Abgasaustrittsöffnungen (6) mit Anschlussmöglichkeit für einen Abgas- und Kondensatsammler, und
- Naben (7) für die wasserseitige Verbindung der Kesselglieder (1) untereinander,
**dadurch gekennzeichnet, dass** die Längsachse der oben angeordneten Brennkammer (2) horizontal verläuft, und dass die Nachschaltheizfläche (5) im Inneren des Kesselgliedes (1) integriert ist und im Wesentlichen von oben nach unten mit Heizgas durchströmt wird.

2. Gliederheizkessel nach Anspruch 1,
**dadurch gekennzeichnet, dass** die Nachschaltheizfläche (5) an ihren vertikalen Seiten vom Kesselwasserraum umschlossen ist.

3. Gliederheizkessel nach Anspruch 1 oder 2,
**dadurch gekennzeichnet, dass** die Nachschaltheizfläche (5) im Kesselglied (1) mit angegossen und mit einer korrosionsbeständigen Beschichtung versehen ist.

4. Gliederheizkessel nach Anspruch 1 oder 2,
**dadurch gekennzeichnet, dass** die Nachschaltheizfläche (5) aus einem gesonderten, mindestens ein rohrförmiges oder taschenförmiges Einzelelement (8) umfassenden Wärmetauscher (9) aus korrosionsbeständigem Werkstoff besteht, der im Inneren des Kesselgliedes (1) über eine Flanschverbindung hydraulisch eingebunden ist.

5. Gliederheizkessel nach Anspruch 4,
**dadurch gekennzeichnet, dass** jedes Einzelelement (8) der Nachschaltheizfläche (5) einen Kompensator zum Ausgleich von Längenausdehnungen aufweist.

6. Gliederheizkessel nach einem der Ansprüche 1 bis 5,
**gekennzeichnet durch** senkrecht auf der Längsachse der Brennkammer (2) stehende, im Randbereich der Kesselglieder (1) angeordnete, mindestens einen Teilbereich des Brennkammerumfangs einnehmende Überströmkanäle (10), in denen das Heizgas von der Brennkammer (2) in die Strömungskanäle (3) strömt.

7. Gliederheizkessel nach einem der Ansprüche 1 bis 6,
**dadurch gekennzeichnet, dass** die Überströmkanäle (10) im Wesentlichen nach oben gerichtet sind.

8. Gliederheizkessel nach einem der Ansprüche 1 bis 7,
**dadurch gekennzeichnet, dass** das Kesselglied (1) einen symmetrischen Aufbau besitzt,
- wobei die Brennkammer (2) das Zentrum des oberen Bereiches bildet, beidseitig von Strömungskanälen (3) für Heizgas umgeben ist, und die Nachschaltheizfläche (5) in zwei Bereiche (5.1, 5.2) unterhalb dieser Strömungskanäle (3) aufgegliedert ist, und
- wobei zwischen diesen Bereichen (5.1, 5.2) ein Teil des Kesselwasseraumes bis in den Bereich der unteren Nabe (7) ragt, der Kesselwasserraum sich nach oben hin fortsetzt, in einen zylindrischen Mantel um die Brennkammer (2) übergeht und im oberen Bereich in der oberen Nabe (7) mündet.

9. Gliederheizkessel nach einem der Ansprüche 1 bis 8,
**dadurch gekennzeichnet, dass** die Grenzfläche zwischen zwei benachbarten Kesselgliedern (1) heizgas- und kondensatdicht ausgeführt ist.
